# EUROPEAN PATENT SPECIFICATION

(11) **EP 2 134 777 B1**
(45) Date of publication and mention of the grant of the patent: **14.08.2013**
(21) Application number: 08735990.7
(22) Date of filing: 09.04.2008
(51) Int. Cl.: C08K 3/20, H01B 3/30

(54) **NANO-MODIFIED WIRE ENAMELS AND ENAMELLED WIRES THEREOF**
NANOMODIFIZIERTE DRAHTLACKE UND DAMIT LACKIERTE DRÄHTE
ÉMAUX À FILS NANO-MODIFIÉS ET FILS ÉMAILLÉS CORRESPONDANTS

(30) Priority: 16.04.2007 EP 07106231
(43) Date of publication of application: 23.12.2009
(73) Proprietor: Altana Electrical Insulation GmbH, 46483 Wesel (DE)
(72) Inventor: CANCILLERI, Ezio, I-63036 Spinetoli (ap) (IT); BIONDI, Giovanna, I-63039 San Benedetto Del Tronto (ap) (IT); LOGGI, Giovanni, I-63039 San Benedetto Del Tronto (ap) (IT)
(74) Representative: Fitzner, Uwe
(86) International application number: PCT/EP2008/054264
(87) International publication number: WO 2008/125559

(56) References cited:
- EP-A- 1 484 361
- WO-A-00/54286
- DE-A1- 4 037 972
- US-A- 4 537 804

## Description

The present invention relates to the use of nanomaterials in wire enamels based on compositions of the kind known and usual in the insulated magnet wire sector, preferably polyesters, polyesterimides, polyamideimides and/or polyurethanes. Out of this enamels magnet wires are produced showing improved thermal and mechanical properties.

Enamelled wires employed in electrical and electronic devices are subjected to high temperatures due to the heat produced by Joule effect originating from the current flow which generates a magnet field. To prevent deterioration and deformation, enamelled wires must be heat resistant. Furthermore, due to the continuous reduction of machines size, the hostile conditions in which certain motors or coils in electric automobile parts must perform, such as in high temperature states or in massive overcurrent flows, an increasing demand of wires with improved heat resistance is occurring.

The state of the art is the use of polyimide coated wires showing superior thermal properties: polyimides are known and described e.g. in GB 898651, US 3,207,728, EP 0 274 602 and EP 0 274 121.

Also inorganic modified polyimides are known (JP 2001351440, JP 2002304915) giving also wires with superior thermal properties. Polyimide insulated wires have however many disadvantages: they are not as abrasion resistant as other kinds (e.g. PVF or nylon overcoated wires); they have a strong tendency to hydrolyse in sealed systems containing moisture; they will solvent craze unless winding stresses are relieved (e.g. by thermal treatments); they are very difficult to strip, requiring highly corrosive strippers; their availability as for solid content range is quite restricted (very low with respect to the other enamels types).

Other coatings with excellent heat resistance are based on inorganic coatings (JP 2006143543, JP 2003123551, US 20060128548). Such materials have the disadvantages to require a special application and to reduce the life of the coating devices which are subjected to a continuous abrasive action of the inorganic moiety. Besides the wire coating can be damaged during coil operations which subject the wire to mechanical stresses such as compression, elongation and friction. Furthermore a ceramic enamels have a strong tendency to crack during heat cycles, peeling off the conductor.

Similar prior art is disclosed in EP 1 484 361, US 4,537,804, WO 00/54286 and DE 40 37 972.

The objective of this invention is to provide a process/possibility for the preparation of wire enamel compositions having improved thermal properties, to provide enamelled wires coated with modified conventional enamels, like polyesters, polyesterimides, polyurethanes and polyamideimides which exhibit improved mechanical and especially thermal properties with respect to standard enamels. The wire enamels resulting from the instant invention should not require other particular application conditions then standard and should not imply increased maintenance operations on enamelling machines with respect to usual enamelling.

The objects of the instant invention are solved by the use of nanomaterials in wire enamel to improve the thermal properties of the wire enamel.

The present invention will be hereinafter explained in details.

Polyester wire enamels contain condensation products of aromatic and/or aliphatic polyvalent carboxylic acids and anhydrides thereof, aromatic and/or aliphatic polyvalent alcohols and/or tris-(2-hydroxyethyl) isocyanurate (THEIC) dissolved in cresylic solvents. In addition they contain normally solvent naphtha and one or more cross-linking catalysts; for details see US 3,342,780, US 3,249,578, EP 0 144 281 and WO 92/02776. They are commercial products known to the specialists. Normally polyester wire enamels are used in a dual coat system as base coat under a polyamideimide overcoat.

Polyesterimide wire enamels contain usually a polyesterimide resin dissolved in a mixture of cresylic acids and solvent naphtha. In addition they contain curing catalysts and additives. The polyesterimide resin is a condensation product of aromatic and/or aliphatic polyvalent carboxylic acids and anhydrides thereof, a dicarboxylic acid resulting as reaction product of trimellitic anhydride (TMA) and an aromatic or aliphatic diamine, diaminodiphenyl methane being preferred, aromatic and/or aliphatic polyvalent alcohols and/or tris-(2-hydroxyethyl) isocyanurate (THEIC). Details can be found in patents like DE 14 45 263, DE 14 95 100, WO 91/07469, WO 90/01911, which present the State-of-the-art.

Polyurethane wire enamels contain usually a polyesterpolyol resin and a blocked polyisocyanate. They are solved usually in a mixture of cresylic acids and solvent naphtha; curing catalysts are commonly tertiary amines, organic salts of tin, zinc, iron and other metals. The polyester is normally a condensation product of a aromatic and/or aliphatic polyvalent carboxylic acids and anhydrides thereof, aromatic and/or aliphatic polyvalent alcohols. In some polyurethane wire enamels polyesterimides are used instead of polyesters. The blocked polyisocyanate is the reaction product of aromatic di- or polyisocyanates with cresylic acids or phenol. Details can be found in patents like DE 144749, DE- 957157, DE 28 40 352, DE 25 45 912 and WO 90/01911.

Polyesters, polyesterimides and polyurethanes are extremely good soluble in cresylic acids, being mixtures of phenol, from 1 to 90%, cresols, from 1 to 99 %, xylenols, from 1 to 99 %, tri-methyl phenol, from 0 to 30 %, ethyl phenols, from 0 to 20 %, anisols and other low molecular weight alkylated phenols (2<C<5). The cresylic acids are used as wire enamels solvents normally in a blend with high boiling aromatic hydrocarbons like solvent naphtha, xylene, Solvesso 100, Solvesso 150 and others. Occasionally other solvents like high boiling alcohols or high boiling glycolethers and others can be also used.

Polyamideimide wire enamel contain a polyamideimide resin dissolved in a mixture of polar aprotic organic solvents. The resin is prepared by directly reacting a tricarboxylic acid anhydride with a diisocyanate. As employable tricarboxylic acid anhydride, trimellitic anhydride (TMA) is preferred. As employable isocyanates, aromatic diisocyanates (such as 4,4'-diphenylmethane diisocyanate and tolylene diisocyanate) are preferred. As solvents N-methyl-2-pyrrolidone (NMP), N-ethyl-2-pyrrolidone (NEP), N,N'-dimethylacetoamide, N,N'-dimethylformamide with xylene, solvent naphtha and other hydrocarbons are empolyed. The State-of-the-art is described in patents like US 3,554,984, DE 24 41 020, DE 25 56 523, DE 12 66 427 and DE 19 56 512.

It was found by the authors of the present invention that the use of nanomaterials in wire enamels by adding a nanomaterial to the polymer base of a wire enamel composition prior to application of the wire enamel, gives rise to improved properties with respect to unmodified enamels. In particular such enamels exhibit outstanding mechanical and especially thermal properties with respect to conventional ones and do not require special application conditions then standard, due to the nanoscopic size of involved inorganic material. Furthermore each kind of enamel can basicly be nanomodified with the use of the instant invention without deteriorating its standard properties which may result improved or remain unchanged.

Nanomaterials are normally inorganic materials whose average radius is in the range from 1 to a few hundreds of nanometres (nm). This materials are available from commercial sources (Degussa AG, Nanophase Technologies Coprporation, and others). Nanomaterials blended into various plastic materials or films cause significant improvements of mechanical properties, like scratch resistance and film hardness (proceedings of "Nanocomposite 2001", Baltimore 2001; "Second annual Wood Coatings and Substrates Conference", Greensboro, 2006).

The nanoparticles which can be used according to the invention are particles whose average radius is in the range from 1 to 300 nm, preferably in a range from 2 to 100 nm, particularly preferably in a range from 5 to 65 nm. Examples of preferred nanoparticles are nano-oxides, nano-metaloxides, metaloxides or hydrated oxides of aluminium, tin, boron, germanium, gallium, lead, transition metals and lanthanides and actinides, particularly of the series comprising aluminium, silicon, titanium, zinc, yttrium, vanadium, zirconium and/or nickel, preferably aluminium, silicon, titanium and/or zirconium, which are nanosized in the dispersed phase, which can be employed alone or in combination. Among nanometaloxides, nanoaluminas are the most preferred. Examples of nanoaluminas are: BYK^{®}-LP X 20693 and NanoBYK 3610 by BYK-Chemie GmbH Nycol AI20OSD by Nycol Nano Technologies Inc., Dispal X-25 SR and SRL, Disperal P2, P3, OS1 and OS2 by Sasol Germany GmbH. Among nanoaluminas, ceramic particles of aluminium oxide pre-dispersed in a polar solvent, such as BYK^{®}-LP X 20693 and NanoBYK 3610 by BYK-Chemie GmbH are preferred.

In a preferred embodiment of the instant invention, the nanoparticles can be used together with coupling agents.

As coupling agents, any commonly known functional alkoxy- or aryloxy-silanes may be used. Among functional silanes, (isocyanatoalkyl)-trialkoxy silanes, (aminoalkyl)-trialkoxy silanes, (trialkoxysilyl)-alkyl anhydrides, oligomeric diamino-silane-systems are preferred. The alkyl radical and the alkoxy group of the functional silane having 1 to 6 carbon atoms and more preferably 1 to 4. The aforementioned alkyl and alkoxy groups may further have a substituent thereon. Also useful as coupling agents are titanates and/or zirconates. Any common ortho-titanic or zirconic acid ester may be used such as, for example, tetraisopropyl, tetrabutyl, acetylacetone, acetonacetic acid esters, diethanolamine, triethanolamine, cresyl titanate or zirconate.

In a preferred embodiment of the present invention the wire enamel comprises
a) from 10 to 80%, preferably 20 to 70%, especially 25 to 60%, by weight of polymer base,
b) from 0.01 to 50%, preferably 0.2 to 20%, especially 1.0 to 10%, by weight of a nanomaterial
c) from 19 to 90%by, preferably 29 to 80%, especially 39 to 74%, weight of solvents, curing catalysts, coupling agents and additives, wherein
the percentages are based on the entire wire enamel and add up to 100% in any case.

The the preparation of the nano-modified wire enamels can be conducted in several ways.

The nanoparticles can be dispersed in a suitable solvent at different temperatures. The obtained dispersions are then added to the wire enamel.

It is also possible to disperse the nanomaterials in solvents and perform the resin synthesis in this dispersion.

To enhance the dispersion of nanoparticles in the polymer solution matrix, coupling agents such as functional silanes, titanates or zirconates may be added directly to the nanoparticles dispersion and herein mixed before it is loaded to the polymer resin solution or may be added directly to the polymer solution before adding the nanoparticles dispersion. Coupling agents may alternatively be mixed to the polymer solution prior to the nanoparticles dispersion loading, for a better linkage of the inorganic moiety to the organic one. The mixture of polymer solution and coupling agent may be stirred at room temperature or at temperatures relatively low for a few hours, before nano-metal oxide solution is added.

The invention relates also to the manufacturing of enamelled wires by using the disclosed compositions prepared as described above.

The coating and curing of the composition according to the present invention does not require any particular procedure than conventional application. The used wires, whose types and diameters are the same as those ones employable for non-modified related enamels may be coated with a diameter from 0.005 to 6 mm. Suitable wires include conventional metal ones, preferably copper, aluminium or alloys thereof. There are no restrictions with regard to wire shape, in particular either round and rectangular wires can be used.

The composition resulting from the present invention can be applied as single coat, double coat or multi-layer coat. As double coat or multi layer coat, nano-modified enamels can be applied together with non modified enamels. Preferred is the use of nanomodified enamels for each coating.

The composition may be applied in conventional layer thickness, dry layer thickness being in accordance with the standardised values for thin and thick wires.

The composition resulting from the present invention is applied on the wire and cured in an horizontal or vertical oven.

The wire can be coated and cured from one to several times in succession. As curing temperature, suitable range can vary from 300 to 800°C, according to the conventional parameters used for related non-modified enamels and the nature of the wire to be coated. Enamelling conditions, such as number of passes, enamelling speed, oven temperature depend on the nature of the wire to be coated.

The enamelled wires made were tested in accordance to IEC 60851.

It was found that the wire enamel formulations prepared as described above show when coated and cured on the wires a higher heat resistance with respect to conventional non-modified related enamels. In particular increased temperature resistance is measured as enhanced cut-through value. Also heat shock is enhanced permitting nano-modified enamelled wires to withstand higher temperatures for a determined time without cracking of the wounded wire. Furthermore, coatings obtained with the nano-modified enamels resulting from the invention show enhanced abrasion resistance and, sometimes they have enhanced flexibility with respect to conventional coatings.

### EXAMPLES

### Preparation of wire coatings according to the prior art

### EXAMPLE 1 (polyamideimide for comparison)

A four-necked flask with a volume of 2 litres was equipped with a stirrer, a cooling tube and a calcium chloride tube, and the flask was charged with 192.1 g of trimellitic anhydride (TMA), 250.3 g methylene diphenyl 4,4'-diisocyanate (MDI) and 668 g of N-methyl-2-pyrrolidone (NMP). The resultant mixture was reacted for 2 hours at 80°C, then heated up to 140°C and kept under stirring at that temperature until no further carbon dioxide forms. Thereafter, the reaction mixture was cooled to 50°C, and 257 g of xilene were added to the reaction mixture. According to the above procedure, a polyamideimide resin solution having a resin concentration of 33.0% by weight and viscosity of 900 cPs at 20°C was obtained.

### EXAMPLE 2 (polyester for comparison)

A three-necked flask with a volume of 2 litres, fitted with a thermometer, stirrer and distillation unit was charged with 54 g of ethylene glycol together with 179 g of tris-(2-hydroxyethyl) isocyanurate (THEIC), 177 g of dimethyl terephthalate (DMT) and 0.33 g of ortho-titanic acid tetrabutylester (tetrabutyl titanate). The mixture was heated up to 210°C and kept under stirring until 55 g of methanol distilled off. Resulting polyester was then cooled down and formulated with 13 g of tetrabutyl titanate and a sufficient amount of a mixture of 80 parts of cresylic acids and 20 parts of solvent naphtha to form a solution having a solid content of 37.0% by weight.

### EXAMPLE 3 (polyesterimide for comparison)

A three-necked flask with a volume of 2 litres, fitted with a thermometer, stirrer and distillation unit was charged with 300 g of cresylic acids together with 62.0 g of ethylene glycol 261.1 g of THEIC, 194.2 g of DMT and 0.35 g of tetrabutyl titanate.The mixture was heated to 200 °C and kept under stirring untill 60 g of methanol distilled off. After cooling down to 140°C, 192.1 g of TMA and 99.0 g of DADM were added. The solution was then heated up to 205°C within a period of 2 hours and kept under stirring until 33 g of water distilled off. Resulting polymeric mixture was then cooled and formulated with 23 g of tetrabutyl titanate and 110 g of commercially available phenolic resin, under stirring. The solution was further diluted with a sufficient amount of a mixture of 70 parts of cresylic acids and 30 parts of solvent naphtha to form a wire enamel having a solid content of 37.0% by weight.

### EXAMPLE 4 (polyurethane for comparison)

### Preparation of the polyesterpolyol:

A three-necked flask with a volume of 2 litres, fitted with a thermometer, stirrer and distillation unit was charged with 194.1 g of DMT, 170.0 g of ethylene glycol and 92.1 g of glycerin and 0.06 g of lead acetate. The mixture was heated to 220°C and kept under stirring for a few hours until 64 g of methanol were distilled off. Sufficient cresylic acid was then added to the hot resin to form a polyesterpolyol solution having a solid content of 44.8% by weight.

### Preparation of the blocked polyisocyanate:

A four-necked flask with a volume of 2 litres was equipped with a stirrer, a cooling tube and a calcium chloride tube, and the flask was charged with 150 g of phenol, 150 g of xylenols, 174 g of commercially available toluendiisocyanate (TDI) and 44.7 g of trimethylol propane (TMP). The mixture was heated under stirring to 120°C and kept at such temperature until the reaction mixture was free of isocyanate. Then 120 g of solvent naphtha were added to the mixture under cooling. According to the above procedure, an isocyanate based resin solution having a resin concentration of 46.5% was obtained.

### Preparation of the polyurethane wire enamel:

A two-necked flask with a volume of 2 I equipped with a stirrer, was charged with 30 parts of the polyesterpolyol resin prepared and 70 parts of the polyisocyanate based resin prepared. To this mixture a sufficient amount of a solvent blend of 40 parts of phenol, 20 parts of xylenols, 20 parts of xylene and 20 parts of solvent naphtha was added. The obtained polyurethane wire enamel had a solid content of 33.0% by weight.

### Preparation of wire coatings according to the invention

### EXAMPLE 1a (preparation of nano-modified polyamideimide)

A four-necked flask with a volume of 2 litres was equipped with a stirrer, a cooling tube and a calcium chloride tube, and the flask was charged with 33.0 g of BYK-LP X 20693 and 77.0 g of N-methyl pyrrolidone (NMP). The mixture was then stirred at 40°C for 2 hours, then 1000g of a solution of polyamideimide resin of example 1 having a concentration of 33% by mass were added to the said vessel. The mixture was stirred at room temperature for a few hours; the solution was then filtered to remove occasional solid impurities, obtaining a nano-modified polyamideimide having a solid content of 32.2% by mass. In this case the content of alumina (Al₂O₃) was 5% by mass.

### EXAMPLE 1b (preparation of nano-modified polyamideimide)

Like described in example 1 a, the example 1 b was prepared using NANOBYK 3610 (by BYK Chemie) obtaining a nano-modified polyamideimide having a solid content of 32.3% by mass. In this case the content of alumina (Al₂O₃) was 5% by mass.

### EXAMPLE 1c (preparation of nano-modified polyamideimide)

Like described in example 1 a, the example 1 c was prepared using Disperal P2 (by Sasol) obtaining a nano-modified polyamideimide having a solid content of 32.4% by mass. In this case the content of alumina (Al₂O₃) was 5% by mass.

### EXAMPLE 1d (preparation of nano-modified polyamideimide)

Like described in example 1 a, the example 1d was prepared using Nycol AL20SD (by Nycol) obtaining a nano-modified polyamideimide having a solid content of 32.4% by mass. In this case the content of alumina (Al₂O₃) was 5% by mass.

### Enamelling and testing:

Copper wires with a bare wire thickness of 0.71 mm were used as conductors of the insulated wires. The enamel was coated and baked 14 times in an air-recirculation enamelling machine MAG HEL 4/5 at a temperature of 520°C at an enamelling speed of 32 m/min; dies were used as application system. The resulting layer thickness was 0.070 mm.

**Table 1: Test results of nano-modified polyamideimide with different nanoparticles**

| | Example 1a | Example 1b | Example 1c | Example 1d | Example 1 (comparative) |
|---|---|---|---|---|---|
| Nanoadditive | BYK LP X 20693 | NANOBYK 3610 | Disperal P2 | Nycol Al20OSD | - |
| Flexibility (1xD, % pre-stretching) | 20 | 15 | 15 | 15 | 15 |
| Unidirectional Abrasions (N) | 18 | 19 | 18 | 17 | 16 |
| Tangent delta (°C) | 275 | 273 | 272 | 269 | 270 |
| Cut-through (°C) | 450 | 440 | 430 | 430 | 410 |
| Heat shock (30' @ 240°C) | 3/3 | 2/3 | 2/3 | 2/3 | 2/3 |

| | | | | | |
|---|---|---|---|---|---|
| From table 1 it can be seen that the nanomodified products have higher cut-through than comparative example. Also higher abrasion resistance is achieved. The enamel from Example 1a fully pass (3 specimens out of three) the Heat shock test at 240°C. | | | | | |

### EXAMPLE 1e (preparation of nano-modified polyamideimide)

Like described in example 1a, the example 1e was prepared by using BYK-LP X 20693 in such an amount that the obtained nano-modified polyamideimide had a solid content of 32.8% by mass and a content of alumina (Al₂O₃) of 2% by mass.

### EXAMPLE 1f (preparation of nano-modified polyamideimide)

Like described in example 1a, the example 1f was prepared by using BYK-LP X 20693 in such an amount that the obtained nano-modified polyamideimide had a solid content of 32.1% by mass and a content of alumina (Al₂O₃) of 7.5% by mass.

### EXAMPLE 1g (preparation of nano-modified polyamideimide)

Like described in example 1 a, the example 1g was prepared by using BYK-LP X 20693 in such an amount that the obtained nano-modified polyamideimide had a solid content of 31.8% by mass and a content of alumina (Al₂O₃) of 10% by mass.

**Table 2: Test results of nano-modified polyamideimide with different amounts of nanoparticles**

| | Example 1e | Example 1a | Example 1f | Example 1g | Example 1 (comparative) |
|---|---|---|---|---|---|
| Nanoadditi-ve | BYK LP X 20693 | BYK LP X 20693 | BYK LP X 20693 | BYK LP X 20693 | - |
| Alumina percentage (Al₂O₃ %) | 2 | 5 | 7.5 | 10 | - |
| Flexibility (1xD, % pre-stretching) | 15 | 20 | 20 | 15 | 15 |
| Unidirectional Abrasions (N) | 20 | 18 | 18 | 17 | 16 |
| Tangent delta (°C) | 270 | 275 | 277 | 273 | 270 |
| Cut-through (°C) | 420 | 450 | 490 | 480 | 410 |
| Heat shock (30' @ 240°C) | 2/3 | 3/3 | 3/3 | 3/3 | 2/3 |

| | | | | | |
|---|---|---|---|---|---|
| From table 2 it can be seen that the optimum amount of nanoparticles is in the tested system 7.5%. The product of Example 1f has extremely high cut-through, improved abrasion resistance and heat shock. | | | | | |

### EXAMPLE 1 h (preparation of nano-modified polyamideimide)

Like described in example 1 a, the example 1h was prepared by using BYK-LP X 20693 and (3-aminopropyl)-triethoxy silane. Silane was pre-mixed together with nanoalumina for 4 hours at 40°C in NMP. The nano-modified polyamideimide had a solid content of 33.0% by mass, a content of alumina (Al₂O₃) of 7.5 %by mass and of 0.5% by mass of silane.

**Table 3: Test results of nano-modified polyamideimide showing the influence of coupling agent**

| | Example 1f | Example 1h | Example 1 (comparative) |
|---|---|---|---|
| Nanoadditive | BYK LP X 20693 | BYK LP X 20693 | - |
| Alumina percentage (Al₂O₃ % on) | 7.5 | 7.5 | - |
| Functional silane (%) | - | 0.5 | |
| Flexibility (1xD, % pre-stretching) | 20 | 20 | 15 |
| Unidirectional Abrasions (N) | 18 | 19.6 | 16 |
| Tangent delta (°C) | 277 | 285 | 270 |
| Cut-through (°C) | 490 | 500 | 410 |
| Heat shock (30' @ 240°C) | 3/3 | 3/3 | 2/3 |

| | | | |
|---|---|---|---|
| Table 3 shows that the use of coupling agent further improves properties, especially cut-through and tangent delta. | | | |

### EXAMPLE 2a (preparation of nano-modified polyester)

A three-necked flask with a volume of 2 litres, fitted with a thermometer, stirrer and distillation unit was charged with 37.0 g of BYK-LP X 20693, 1.85 g of (3-aminopropyl)-triethoxy silane and 172.6 g of cresylic acids. The mixture was then stirred at 40°C for 4 hours, then 1000g of a solution of polyester resin of example 2 was added. The mixture was then stirred at 40°C for 2 hours, obtaining a nano-modified polyester having a solid content of 36.7% by mass. In this case the content of silane was 0.5 %by mass and the content of nanoalumina was 5% by mass.

### EXAMPLE 3a (preparation of nano-modified polyesterimide)

A three-necked flask with a volume of 2 litres, fitted with a thermometer, stirrer and distillation unit was charged with 37.0 g of BYK-LP X 20693, 1.85 g of (3-aminopropyl)-triethoxy silane and 172.6 g of. The mixture was then stirred at 40°C for 4 hours, then 1000g of a solution of polyesterimide resin of example 3 was added to the said flask. The mixture was then stirred at 40°C for 2 hours, obtaining a nano-modified polyesterimide having a solid content of 36.8% by mass. In this case the content of silane was 0.5% by mass and the content of nanoalumina was 5% by mass.

**Table 4: Test results of nano-modified polyester and polyesterimide**

| | Example 2a | Example 2 (comparative) | Example 3a | Example 3 (comparative) |
|---|---|---|---|---|
| Nanoadditive | BYK LP X 20693 | - | BYK LP X 20693 | - |
| alumina percentage (Al₂O₃ %) | 5 | - | 5 | - |
| Functional silane (%) | 0.5 | - | 0.5 | - |
| Flexibility (1xD, % pre-stretching) | 30 | 30 | 25 | 25 |
| Unidirectional Abrasions (N) | 18 | 14 | | |
| Tangent delta (°C) | 188 | 182 | 207 | 204 |
| Cut-through (°C) | 470 | 440 | 440 | 420 |
| Heat shock (30' @ 220°C) | 2/3 | 1/3 | 2/3 | 1/3 |

| | | | | |
|---|---|---|---|---|
| Table 4 shows that the nanomodified products have higher cut-through than comparative example. Also higher abrasion resistance is achieved | | | | |

### EXAMPLE 2b (preparation of nano-modified polyester)

Like described in example 2a, the example 2b was prepared by using N-Dimethoxy(methyl)silylmethyl-O-methyl-carbamate in 0.5% by mass.
The enamelling results were equivalent to Example 2a.

The enamelled wires tested in table 5 were made from copper wires with a bare wire thickness of 0.71 mm. The enamel was coated first with a polyester or polyesterimide as base coat (11 layers) plus 3 layers of polyamideimide top coat.

**Table 5: Test results of dual coated wires**

| | Example 2a (base) + Example 1h (top) | Example 2 + Example 1 (comparative) | Example 3a + Example 1h | Example 3 + Example 1 (comparative) |
|---|---|---|---|---|
| Nanoadditive | BYK LP X 20693 | - | BYK LP X 20693 | - |
| alumina percentage (Al₂O₃ %) | 5 (base) + 7.5 (top) | - | 5 (base) + 7.5 (top) | - |
| Functional silane (%) | 0.5 (base) + 0.5 (top) | - | 0.5 (base) + 0.5 (top) | - |
| Flexibility (1xD, % pre-stretching) | 20 | 15 | 20 | 15 |
| Unidirection al Abrasions (N) | 22 | 19 | 22 | 19 |
| Tangent delta (°C) | 181 | 178 | 208 | 205 |
| Cut-through (°C) | 460 | 410 | 450 | 400 |
| Heat shock (30' @ 240°C) | 3/3 | 1/3 | 3/3 | 2/3 |

| | | | | |
|---|---|---|---|---|
| Table 5 shows that dual coated nanomaterial modified systems are in both cases superior to the unmodified products. In all cases all properties are enhanced. | | | | |

### EXAMPLE 4a (preparation of nano-modified polyurethane)

A three-necked flask with a volume of 2 liter, fitted with a thermometer, stirrer and distillation unit was charged with 33.0 g of BYK-LP X 20693, 1.65 g of (3-aminopropyl)-triethoxy silane and 154 g of cresylic acids. The mixture was then stirred at 40°C for 4 hours, then 1000g of a solution of polyurethane resin of example 4 was added to the said flask. The mixture was then stirred at 40°C for 2 hours, obtaining a nano-modified polyurethane having a solid content of 33.3% by mass. In this case the content of silane was 0.5% by mass and the content of nanoalumina was 5% by mass.

### EXAMPLE 4b (preparation of nano-modified polyurethane)

Like described in example 4a, the example 4b was prepared by using BYK-LP X 20693 and (3-aminopropyl)-triethoxy silane in such an amount that the obtained nano-modified polyurethane had a solid content of 33.3% by mass, a content of alumina (Al₂O₃) of 2% by mass and of 0.2% by mass of silane.

### EXAMPLE 4c (preparation of nano-modified polyurethane)

Like described in example 4a, the example 4c was prepared by using BYK-LP X 20693 and (3-aminopropyl)-triethoxy silane in such an amount that the obtained nano-modified polyurethane had a solid content of 33.3% by mass, a content of alumina (Al₂O₃) of 1% by mass and of 0.1% by mass of silane.

**Table 6: Test results of nanomodified polyurethane wire enamels**

| | Example 4a | Example 4b | Example 4c | Example 4 (comparative) |
|---|---|---|---|---|
| Nanoadditive | BYK LP X 20693 | BYK LP X 20693 | BYK LP X 20693 | - |
| alumina percentage (Al₂O₃%) | 5 | 2 | 1 | - |
| Functional silane (%) | 0.5 | 0.2 | 0.1 | - |
| Solderability(second s at 380°C) | 2.5 | 2.5 | 2.3 | 2.5 |
| Unidirectional Abrasions (N) | 15 | 14 | 13 | 12 |
| Tangent delta (°C) | 176 | 181 | 182 | 185 |
| Cut-through (°C) | 270 | 280 | 270 | 260 |
| Heat shock (30' @ 220°C) | 2/3 | 1/3 | 1/3 | 0/3 |

| | | | | |
|---|---|---|---|---|
| Table 6 shows that there is an optimum content of nanoparticles of 2% leading to a significant increase of the cut-through without affecting the solderability of the polyurethane coated copper wire (0.71 mm of diameter). Also the heat shock is considerably improved. | | | | |

## Claims

1. Use of nanomaterials in wire enamel to improve the thermal properties of the wire enamel, **characterized in that**
the polymer base of the wire enamel is selected from the group consisting of polyamideimide, polyester, polyesterimide, polyurethane and mixtures thereof, and **characterized in that**
the nanomaterials are selected from the group consisting of nano-oxides, nano-metaloxides, metaloxides or hydrated oxides of aluminium, tin, boron, germanium, gallium, lead, transition metals, lanthanides, actinides and mixtures thereof, or
the nanomaterial is selected from the group consisting of nano-oxides, nano-metaloxides, metaloxides or hydrated oxides of aluminium, silicon, titanium, zinc, yttrium, vanadium, zirconium, nickel and mixtures thereof.

2. Use according to claim 1, **characterized in that**
the nanomaterial is from the group of nanoaluminas.

3. Use according to claim 1, **characterized in that**
the average radius of the nano particles is in the range from 1 to 300 nm, preferably from 2 to 100 nm, especially from 5 to 65 nm.

4. Use according to claim 1, **characterized in that**
the nanomaterial is treated with one or more coupling agents.

5. Use according to claim 4, **characterized in that**
the coupling agents are selected from the group consisting of alkoxy- or aryloxy-silanes, (isocyanatoalkyl)-trialkoxy silanes, (aminoalkyl)-trialkoxy silanes, (trialkoxysilyl)-alkyl anhydrides, oligomeric diamino-silanes, titanates, zirconates and mixtures thereof.

6. Use according to claim 1 **characterized in that** the wire enamel comprises
a) from 10 to 80%, preferably 20 to 70%, especially 25 to 60%, by weight of polymer base,
b) from 0.01 to 50%, preferably 0.2 to 20%, especially 1.0 to 10%, by weight of a nanomaterial
c) from 19 to 90%by, preferably 29 to 80%, especially 39 to 74%, weight of solvents, curing catalysts, coupling agents and additives, wherein
the percentages are based on the entire wire enamel and add up to 100% in any case.

## Patentansprüche

1. Verwendung von Nanomaterialien in Drahtlack zur Verbesserung der thermischen Eigenschaften des Drahtlacks, **dadurch gekennzeichnet, dass** die Polymerbasis des Drahtlacks aus der Gruppe bestehend aus Polyamidimid, Polyester, Polyesterimid, Polyurethan und Mischungen davon ausgewählt ist, und **dadurch gekennzeichnet, dass** die Nanomaterialien aus der Gruppe bestehend aus Nanooxiden, Nanometalloxiden, Metalloxiden oder Oxidhydraten von Aluminium, Zinn, Bor, Germanium, Gallium, Blei, Übergangsmetallen, Lanthaniden, Actiniden und Mischungen davon ausgewählt sind oder
das Nanomaterial aus der Gruppe bestehend aus Nanooxiden, Nanometalloxiden, Metalloxiden oder Oxidhydraten von Aluminium, Silicium, Titan, Zink, Yttrium, Vanadium, Zirkonium, Nickel und Mischungen davon ausgewählt ist.

2. Verwendung nach Anspruch 1, **dadurch gekennzeichnet, dass**
das Nanomaterial aus der Gruppe der Nanoaluminiumoxide ausgewählt ist.

3. Verwendung nach Anspruch 1, **dadurch gekennzeichnet, dass**
der durchschnittliche Radius der Nanopartikel im Bereich von 1 bis 300 nm, vorzugsweise von 2 bis 100 nm und speziell von 5 bis 65 nm liegt.

4. Verwendung nach Anspruch 1, **dadurch gekennzeichnet, dass**
das Nanomaterial mit einem oder mehreren Kupplungsmitteln behandelt ist.

5. Verwendung nach Anspruch 4, **dadurch gekennzeichnet, dass**
die Kupplungsmittel aus der Gruppe bestehend aus Alkoxy- oder Aryloxysilanen, (Isocyanatoalkyl)-trialkoxysilanen, (Aminoalkyl)trialkoxysilanen, (Trialkoxysilyl)alkylanhydriden, oligomeren Diaminosilanen, Titanaten, Zirconaten und Mischungen davon ausgewählt sind.

6. Verwendung nach Anspruch 1, **dadurch gekennzeichnet, dass** der Drahtlack
a) 10 bis 80 Gew.-%, vorzugsweise 20 bis 70 Gew.-% und speziell 25 bis 60 Gew.-% Polymerbasis,
b) 0,01 bis 50 Gew.-%, vorzugsweise 0,2 bis 20 Gew.-% und speziell 1,0 bis 10 Gew.-% eines Nanomaterials,
c) 19 bis 90 Gew.-%, vorzugsweise 29 bis 80 Gew.-% und speziell 39 bis 74 Gew.-% Lösungsmittel, Härtungskatalysatoren, Kupplungsmittel und Additive
umfasst, wobei sich die Prozentangaben auf den gesamten Drahtlack beziehen und sich jeweils zu 100% summieren.

## Revendications

1. Utilisation de nanomatériaux dans de l'émail isolant pour améliorer les propriétés thermiques de l'émail isolant, **caractérisée en ce que**
la base polymère de l'émail isolant est choisie dans le groupe constitué par un polyamide-imide, un polyester, un polyester-imide, un polyuréthane, et les mélanges de ceux-ci, et **caractérisée en ce que**
les nanomatériaux sont choisis dans le groupe constitué par les nano-oxydes, nano-oxydes métalliques, oxydes métalliques ou oxydes hydratés d'aluminium, étain, bore, germanium, gallium, plomb, métaux de transition, lanthanides, actinides, et les mélanges de ceux-ci, ou
le nanomatériau est choisi dans le groupe constitué par les nano-oxydes, nano-oxydes métalliques, oxydes métalliques ou oxydes hydratés d'aluminium, silicium, titane, zinc, yttrium, vanadium, zirconium, nickel, et les mélanges de ceux-ci.

2. Utilisation selon la revendication 1, **caractérisée en ce que**
le nanomatériau appartient au groupe des nano-alumines.

3. Utilisation selon la revendication 1, **caractérisée en ce que**
le rayon moyen des nanoparticules se situe dans la gamme de 1 à 300 nm, de préférence de 2 à 100 nm, en particulier de 5 à 65 nm.

4. Utilisation selon la revendication 1, **caractérisée en ce que**
le nanomatériau est traité avec un ou plusieurs agents de couplage.

5. Utilisation selon la revendication 4, **caractérisée en ce que**
les agents de couplage sont choisis dans le groupe constitué par les alcoxy- ou aryloxy-silanes, les (isocyanatoalkyl)-trialcoxy-silanes, les (aminoalkyl)-trialcoxy-silanes, les anhydrides de (trialcoxysilyl)-alkyle, les diamino-silanes oligomères, les titanates, les zirconates, et les mélanges de ceux-ci.

6. Utilisation selon la revendication 1, **caractérisée en ce que** l'émail isolant comprend
a) de 10 à 80 %, de préférence 20 à 70 %, en particulier 25 à 60 %, en poids de base polymère,
b) de 0,01 à 50%, de préférence 0,2 à 20 %, en particulier 1,0 à 10 %, en poids d'un nanomatériau,
c) de 19 à 90 %, de préférence 29 à 80 %, en particulier 39 à 74 %, en poids de solvants, catalyseurs de durcissement, agents de couplage et additifs,
les pourcentages étant basés sur l'émail isolant tout entier et leur total faisant 100 % dans tous les cas.
